# EUROPEAN PATENT SPECIFICATION

(11) **EP 2 240 614 B1**
(45) Date of publication and mention of the grant of the patent: **08.08.2012**
(21) Application number: 09704949.8
(22) Date of filing: 28.01.2009
(51) Int. Cl.: C22B 11/00, C22B 7/00, C22B 3/06

(54) **PROCESS FOR THE RECOVERY OF PRECIOUS METALS FROM USED AND/OR DEFECTIVE CATALYTIC CARRIERS**
VERFAHREN ZUR RÜCKGEWINNUNG VON EDELMETALLEN AUS GEBRAUCHTEN UND/ODER DEFEKTEN KATALYSATORTRÄGERN
PROCÉDÉ DE RÉCUPÉRATION DE MÉTAUX PRÉCIEUX À PARTIR DE SUPPORTS CATALYTIQUES USÉS ET/OU DÉFECTUEUX

(30) Priority: 30.01.2008 BE 200800059
(43) Date of publication of application: 20.10.2010
(73) Proprietor: G.E. Conseils Sprl, 1150 Woluwe-Saint-Pierre (BE); Variabel, Daniel, 7300 Boussu (BE)
(72) Inventor: VARIABEL, Daniel, B-7300 Boussu (BE); GIVRON, Francis, B-1150 Woluwe-Saint-Pierre (BE)
(74) Representative: Powis de Tenbossche, Roland
(86) International application number: PCT/BE2009/000005
(87) International publication number: WO 2009/094732

(56) References cited:
- WO-A-03/010346
- WO-A-2005/100622
- DE-A1- 19 723 160
- FR-A- 2 294 239
- GB-A- 897 150
- GB-A- 922 021
- US-A1- 2007 183 951
- DATABASE WPI Week 200442 Thomson Scientific, London, GB; AN 2004-446724 XP002496420 & RO 119 128 B1 (BROJBOIU D A) 30 April 2004 (2004-04-30) cited in the application

## Description

The subject of the present invention is the industrial recovery of metallic elements, especially precious metals from the group including platinum, gold, palladium, rhodium and mixtures of these, from used or defective catalytic carriers.

Document EP 0 363 314 describes a catalyser recovery process, this process including a stage for the electrolytic dissolution of catalytic substances by a low-frequency alternating voltage when the body of the catalyser is immersed in an acid solution. In the process according to this document, the ceramic body containing catalytic substances is first washed and degreased by means of an aqueous composition containing a dissolving agent or tetrachloroethylene. The body after washing is placed in an acid bath between two electrodes across which an alternating voltage of 10 V is applied with a maximum current of 50 A. As the document specifies, the treatment is intended to dissolve precious metals at the same time as non-precious elements or metals such as zinc, aluminium, iron, etc.

This process does not provide efficient recovery of precious metals in the form of a solution which is pure or substantially pure or in a form suitable for use to provide a substrate with a catalytic layer rich in precious metals. The recovery of precious metals which are mixed with other metals and impurities involves a neutralisation stage. The utilisation of the said precious metals from this neutralisation stage in order to coat a substrate destined to become catalytic necessitates complex stages of refining and purification and it is then necessary to treat the refined metals again with acids so as to prepare solutions ready for use for applying a catalytic layer to the substrate.

One is also aware of document WO 2005/100622 describing a process for recovering the catalytic coating of catalytic converters. This process includes a stage of direct treatment of the catalytic media with nitric acid in order to destroy the bonds between the catalytic coating and the substrate, followed by a stage for the removal of the catalytic coating, this stage comprising ultrasound agitation and rinsing with water. Such a process does not permit the preparation of a solution rich in precious metals and with low contents of metals such as aluminium, iron, zinc, etc. and other impurities.

From the point of view of the industrial process in use at present, the proposal is to crush the substrates into fine particles and to heat these particles to a very high temperature in order to melt them. Such a method requires a considerable quantity of energy. The method is also complex, in view of the dilution of a very small quantity of precious metals in a large volume of molten gangue.

Document WPI / Week 200442 Thomson Scientific, London, GB, Abstract number 2004-446724, Brojboiu et al, RO119128 describes a process for treating used catalytic media comprising solubilisation in two stages in order to recover platinum, palladium and rhodium. The platinum and palladium are obtained by treatment with 4.5 - 7 M concentrated hydrochloric acid and with hydrogen peroxide at a concentration of 30%.

Document US2007/0183951 A1 describes a method for recovering coatings containing catalytic compounds from used catalytic devices, the method comprising a first treatment of the used catalytic compounds in a bath of sulphuric and nitric acid in order to recover the catalytic coating with noble metals. The said coating thus recovered (containing a mixture of noble metals and non-noble metals) may then be subjected to a reduction treatment with iron powder, so as to form a deposit of precious metals which can be purified by treatment with aqua regia.

Document GB 922021 described a method for recovering palladium from used catalysers. In this method, the catalyser is treated with hydrochloric acid and a gaseous current of chlorine (bubbling). The use of chlorine bubbling is a hazardous operation. Furthermore, many non-noble metals are also dissolved by the action of hydrochloric acid and gaseous chlorine.

Document WO 03/010346 describes a process for recovering metals in the platinum group from used automobile catalytic converters. In this process, the catalytic converter is wetted with a solution of hydrochloric acid in a reaction chamber, the reaction chamber is heated to form vapours which are recirculated through the reaction chamber and the gaseous vapours are condensed to obtain a solution containing metals in the platinum group.

Document FR 2294239 describes a process for recovering elements from catalysers comprising an aluminium carrier with platinum and iridium, in which the catalytic carrier is subjected to acid attack with concentrated hydrochloric acid in order to obtain a solution which is subsequently treated with a resin to retain the platinum and iridium.

Document DE 197 23 160 describes a process for recovering platinum from used catalysers. In this process, the used catalytic converter is treated by pulsed flames in order to recover the catalytic materials into an aqueous medium before undergoing acid treatment and electrolysis to recover platinum.

Document RO 119128 B1 describes the recovery and selective separation of platinum, palladium and rhodium from spent car catalysts. The method comprises solubilizing with acid in two stages : rhodium is extracted by sulfuric acid treatment and platinum and palladium by treatment with hydrochloric acid and hydrogen peroxide.

The subject of the present invention is a process for the recovery of elements, in particular one or more precious metals, from used or defective catalytic carriers (such as alveolar catalytic carriers, porous catalytic carriers and catalytic substrates), in particular in the form of an acid solution with a low content of impurities (for example from a gangue or matrix, for example in the case of a ceramic carrier) or metals such as aluminium, iron, silicon and magnesium, this process necessitating neither a crushing stage nor a melting stage. The acid solution, after refining, is advantageously used to provide a carrier substrate with a catalytic coating comprising one or more precious metals, which makes even better use of the recovery of precious metals.

In the specification below, the wording "content" of one or more compounds is used for designating the concentration or level of said one or more compounds, while the wording "weak" in one or more compounds is used for designating low content or concentration of said one or more compounds, preferably free or substantially free of said one or more compounds.

The process according to the invention is a process for the recovery of elements, in particular precious metals, from used or defective catalytic carriers or substrates, the process including at least the preparation of an acid solution containing at least one precious metal chosen from the set including gold, platinum, palladium and rhodium and mixtures of these from used or defective catalytic carriers or substrates (for example alveolar and/or porous carriers), the said solution having low contents/concentrations of aluminium, iron, zinc, calcium and magnesium and being suitable or adapted for use in a process to provide a carrier with at least one catalytic coating based on at least one of the said precious metals. The preparation process according to the invention comprising at least the following stages:
- Stage 1: treatment of catalytic carriers (for example alveolar carriers, porous substrates, etc.) with at least an aqueous and/or alcoholic composition or solution, optionally in the form of vapour or partially in the form of vapour to at least partially imbibe the catalytic carriers with the said aqueous and/or alcoholic solution. This treatment is advantageously carried out using an aqueous composition including at least one alcohol, for example ethanol or propanol or isopropanol or a mixture of these, and advantageously at least one degreasing and/or surface-active agent The pH of the composition is for example approximately neutral or even alkaline. The composition is advantageously applied under pressure to the catalytic carrier in order to detach the layer of carbon in an efficient manner. The temperature of the composition or liquid will advantageously lie between 20° C and approximately 100° C. If the treatment is carried out using steam, superheated steam at a temperature above 110° C, for example between 125° C and 250° C will advantageously be used

This treatment of catalytic carriers with at least one aqueous and/or alcoholic composition or solution, optionally in the form of steam or partially in the form of steam, is advantageously controlled in order to ensure that at least 50% (by volume), advantageously at least 75% by volume and preferably at least 85% by volume of the porosity available to water at 20° C and at atmospheric pressure is imbibed with the said aqueous and/or alcoholic solution.

This aqueous and/or alcoholic composition will be weak (low content or low concentration) in, and advantageously free from, sulphuric acid, nitric acid and hydrochloric acid.

The pH of this aqueous and/or alcoholic composition will be advantageously between 4 and 12 and advantageously between 5 and 10.
- Stage 2: treatment of catalytic carriers (for example alveolar and/or porous carriers) at least partially imbibed with the said aqueous and/or alcoholic composition with an acid solution containing at least sulphuric acid but weak in nitric acid and preferably also weak in hydrochloric acid.

The bath or acid solution used on this stage advantageously contains less than 10% by weight of nitric acid and less than 10% by weight of hydrochloric acid, in particular les than 5% by weight of hydrochloric acid. The bath or acid solution preferably contains less than 2% by weight of nitric acid and less than 2% by weight of hydrochloric acid. In particular, the bath or acid solution preferably contains less than 1 % by weight of nitric acid and less than 1 % by weight of hydrochloric acid. The content or concentration of sulphuric acid in the bath is advantageously more than 25% by weight, for example 30 to 75% by weight The pH of the bath or solution measured at 20° C is advantageously less than 4, preferably less than 3 and more specifically less than 2.

The treatment is advantageously carried out by means of a bath subjected to agitation, advantageously by means of ultrasound.

The treatment can also be carried out by passing or circulating the composition through different channels or alveoli open in the catalytic carriers or substrates.

The temperature of the composition is advantageously between 5° C and 100° C, in particular between 20° C and 65° C, a temperature between 20° C and 45° C being preferred. Temperatures higher than the boiling point of the liquid composition at atmospheric pressure are advantageously used in combination with pressures above atmospheric pressure.

The treatment can be carried out in a tank under pressure, for example under a pressure between 1.2 x 10⁵ Pa and 10 x 10⁵ Pa.

In one embodiment the acid treatment bath is used in the form of a batch or reactor vessel containing an approximately predefined quantity of acid bath to treat catalytic carriers or substrates until the achievement of a predefined minimal content or concentration of one or more metals or elements in the form of sulphates or other derivatives by sulphuric acid attack. In another embodiment, the acid treatment bath is continuously renewed, while a quantity of the bath is withdrawn for subsequent treatment in order to recover from the withdrawn quantity zinc, aluminium and rare earths, for example (such as cerium, lanthanum, mixtures of more than one rare earth, etc.).
- Stage 3: washing the catalytic carriers or substrates treated with the said acid solution containing at least sulphuric acid and weak in nitric acid with an aqueous and/or alcoholic composition weak in sulphuric acid and nitric acid. This washing operation is intended to recover precious metals and acid still present in and/or on the carrier. The washing operation can be carried out by means of steam and/or liquid(s), for example water, alcohol, mixtures of water and alcohol(s), water vapour, alcohol vapour, or mixtures of water/alcohol vapour. The washing medium can be projected onto and/or into the substrate in order to remove metals or elements attacked by sulphuric acid not recovered in the previous stage (Stage 2). The washing medium can also be a washing bath in which the treated substrates are immersed, the bath or washing medium being advantageously subjected to agitation, preferably by ultrasound.

The washing medium is advantageously brought to a temperature between 25° C and 200° C, preferably between 50° C and 75° C for liquid washing media and 85° C to 150° C for washing media in vapour form.

The washing medium may be used in a loop or circuit to treat more than one series of treated carriers or substrates.

The washing medium may contain one or more additives, such as one or more surface-active agents.

In order to be recycled, the washing medium is advantageously subjected to one or more treatments, such as filtration, decantation, pH adjustment, precipitation of salts by adding one or more additives, etc.

Washing is advantageously controlled such that the carrier is substantially free of sulphuric acid and/or sulphate compounds after washing and draining.

This washing operation may be followed by a draining and/or drying operation, for example by means of a hot gas, for example hot air, in order to remove the last traces of water, acid or alcohol still present in and/or on the catalytic carriers or substrates. This hot air is advantageously forced through the channels in the carrier or substrate, for example an alveolar carrier, etc.
- Stage 4: treatment of carriers, for example alveolar and/or porous carriers which have been treated with the said acid solution containing at least sulphuric acid and weak (low content or concentration) in nitric acid and washed with an aqueous and/or alcoholic composition weak (low content or concentration) in sulphuric acid and nitric acid, optionally after a draining and/or drying stage, in an acid bath containing at least nitric acid and hydrochloric acid, the said acid bath including at least 10% by weight, advantageously at least 25% by weight and preferably after at least 35% by weight of nitric acid and at least 5% by weight of hydrochloric acid, the said bath being subjected to agitation by ultrasound (produced by one or more ultrasonic transmitters). The bath advantageously contains less than 20% by weight of hydrochloric acid, preferably less than 15% by weight of hydrochloric acid, more specifically less than 10% by weight of hydrochloric acid. Advantageously, the catalytic carriers (for example alveolar and/or porous carriers) which have been treated with the said acid solution containing at least sulphuric acid and weak (low content or concentration) in nitric acid and washed with an aqueous and/or alcoholic composition weak in sulphuric acid and nitric acid are treated in an acid bath containing at least nitric acid and hydrochloric acid, together with at least one peroxidated compound. In a particular embodiment, the treatment takes place for at least part of the time in an acid bath containing at least nitric acid, hydrochloric acid, a peroxidated compound and ammonia. In a preferred embodiment, the peroxidated compound is chosen from among hydrogen peroxide, peroxide of ammonia, peroxides of ammonium and mixtures of these. The bath of nitric acid and hydrochloric acid is advantageously free or substantially free from sulphuric acid.

The content of peroxidated compounds in the bath is advantageously between 0.5% by weight and 20% by weight, preferably between 1 % by weight and 10% by weight

If the bath contains ammonia, an ammonium salt or NH₃, the content of ammonia, ammonium salts or NH₃ is advantageously between 0.5% by weight and 20% by weight, preferably between 1% by weight and 10% by weight. As examples of ammonium compounds, one will us ammonium compounds which are free or substantially free of copper, zinc, sulphur and iron. The ammonium compounds will advantageously only contain atoms from the group comprising N, H, O, C and Cl. In a particular embodiment, the ammonium compounds will be formed solely from atoms chosen from the group comprising N, H, O and C. As examples of compounds, we can quote ammonium carbonate, ammonium citrate, ammonium caprylate, ammonium bitartrate, ammonium bicarbonate, ammonium acetate, ammonium nitrate, ammonium formate, ammonium oxalate, ammonium palmitate and mixtures of these, as well as their reaction products with nitric acid and/or a peroxidated compound, in particular hydrogen peroxide.

The ammonium compound and/or the peroxide compound are advantageously added after a first treatment with nitric acid and hydrochloric acid. During this stage of treatment, the pH (measured at 20° C) is advantageously controlled so that it is and/or remains below 1, in particular below 0.5, or even lower, by adding nitric acid.

In an advantageously embodiment, the acid bath includes at least one alcohol, for example ethanol, such as denaturated ethanol. Other alcohols can also be used, for example isopropanol, methanol, hexanol etc. The quantity of alcohol(s) present in the bath is advantageously at least 1 % by weight, preferably at least 5% by weight, and even more preferably at least 10% by weight

The acid bath advantageously contains less than 20% by weight of water, preferably less than 15% by weight of water and even more preferably less than 10% by weight.

The treatment advantageously takes place while the temperature of the acid bath is maintained between 10° C and 55° C, advantageously between 20° C and 30° C, and/or at least partially under a pressure between 1.5 x 10⁵ Pa and 20 x 10⁵ Pa and/or at least partially takes place with variations of pressure, advantageously between a pressure below 1 x 10⁵ Pa and a pressure above 2 x 10⁵ Pa.

The bath is advantageously used for successively treating series of used and/or defective catalytic carriers or substrates until the bath reaches a specific concentration in one or more precious metals.

The concentration of the acid bath in precious metals in solution or in the form of soluble salts (nitrates or chlorides) (expressed as metal or in metallic form) is for example between 10g and 400g Pt, advantageously between 50g and 300g Pt, preferably between 120g and 250g Pt and in particular approximately 180g Pt per kg of acid bath. For palladium and for 1kg of bath or solution, the palladium content of the bath (expressed in the form of metallic Pd) is for example between 10g and 400g, advantageously between 50g and 300g, preferably between 100g and 220g and in particular approximately 160g. For rhodium and for 1kg of bath or solution, the rhodium content of the bath is for example between 10g and 400g, (advantageously between 50g and 300g, preferably between 60g and 200g and in particular approximately 125g. If the bath contains platinum, it is advantageously free or substantially free of palladium and *vice versa.* For baths containing a mixture of platinum and rhodium or a mixture of palladium and rhodium, the content of rhodium is advantageously lower than that of platinum and palladium.

Advantageously, the precious metal concentration in the acid bath, taking account of any impurities which may be present, will be between 30% and approximately 100% of the concentration at saturation, advantageously between 50% and 75% of the concentration at saturation of the said metals or mixture of metals in the said acid bath at the temperature considered.
- optionally Stage 4bis: draining and/or washing of the carriers or substrates treated in Stage 4 in order to recover traces of acids still present on or in the carrier or substrate.

The carriers or substrates, after having been treated in an acid bath containing at least nitric acid and hydrochloric acid, are advantageously subjected, preferably after a draining stage, to washing by means of aqueous and/or alcoholic composition, advantageously acid, optionally in vapour form, in order to recover the acids and precious metals still present on and/or in the carriers or substrates.

This acid solution resulting from washing the carriers or substrates treated in an acid bath is advantageously used as a washing composition, optionally after a treatment stage, and/or to adjust the content of one or more of the compounds in the bath resulting from stage 4 and/or to dilute a concentrated bath.

This washing operation is advantageously carried out by means of an alcoholic composition or solution.
- Stage 5: when the concentration in the acid bath of one or more precious metals is higher than a minimum value, , optionally after a stage to adjust the content in the bath of one or more precious metals or one or more other elements, treatment at least chemically, and in particular chemically and thermally (advantageously to maintain the temperature of the bath at for example between -30° C and 30° C of at teast a port of the bath in order to lower its contents of chlorine and chlorides by transforming the metal chlorides present in the treated vitaf bath into nitrate and/or nitric and/or nitrous compounds of the said metals, where by reducing its content of hydrochloric acid of less than 1% by weight, and forming a bath weak in hydrochloric acid.

The purpose of this stage is to reduce the chlorine content in the acid bath and to raise the content of nitric acid and in nitrate and/or nitrous compounds.

This stage 5 is advantageously carried out by treating the bath with a source of nitrogen and/or NOₓ (such as NO, NO₂ and mixtures of these), preferably by bubbling nitrogen or a nitrogen compound (preferably a compound which is gaseous at 20° C and at atmospheric pressure) and/or NOₓ into the bath.

Stage 5 is advantageously controlled in order to obtain a concentration of hydrochloric acid below 0.5% by weight, preferably below 0.25% by weight, or even lower.

This treatment is for example carried out by bubbling gaseous nitrogen, gaseous NOx, air and/or gaseous ammonia into the bath. The bath at this time has a temperature which is advantageously low, for example a temperature below 30° C, preferably below 20° C, for example between -10° C and 15° C.

The bath after this treatment with gaseous compounds containing nitrogen may if appropriate be subjected to thermal treatment of short duration at more than 50° C (for example the bath is brought to 50° C more for less than 5 minutes).

Other methods can be used to selectively remove hydrochloric acid, for example by the selective precipitation of chlorides and removal of the precipitated salts, by using membranes which selectively allow the passage of chlorine or hydrochloric acid, etc.

The bath obtained at the end of this stage is weak in chlorinated compounds and in hydrochloric acid, compounds which do not present useful catalytic properties for treating combustion fumes and gases, for catalysing oxidation or reduction reactions, etc.
- optionally a Stage 6: adjustment of pH and/or the content of one or more precious metals and/or other additives to the bath weak in hydrochloric acid in order to form the solution suitable for use in a process for adding to a catalytic carrier at least one coating based on at least one of the said precious metals.

The bath obtained from Stage 5 is rich in nitrate compounds and in nitric acid. Such compounds are useful for forming catalytic deposits on and/or in carriers or substrates. Such carriers or substrates are for example of a metallic, ceramic, composite or other nature, being for example alveolar or not, porous or not, etc.

The pH of this bath is therefor adjuster by adding nitric acid, adding water and/or alcohoL The precious metal content is optionally also adapted, for example to obtain a weight ratio between the precious metals. One also adapts the content in the bath of one or more additives or metals useful for serving as cocatalysts and/or catalysis promoters. Such additives are for example derivatives of rare earths (in particular of cerium or a mixture of cerium and other rare earths), vanadium, copper, strontium, etc., for example in nitrate form.

The bath may be presented in a concentrated form which is subsequently diluted during a stage for impregnation of the substrate or carrier.
- Optionally a State 7: treatment of one or more substrates or carriers, in particular of the ceramic and/or metallic type, with the bath solution weak in hydrochloric acid, advantageously after adjustment of its pH and/or its content in one or more precious metals and/or other additives, to imbibe or deposit on and/or in the said substrates or carriers at least one or more precious metals, advantageously a layer containing at least one or more precious metals, followed by at least one fixing or activation stage of the said precious metal(s) present on and/or in the said substrate(s) or carrie(s) and/or by a stage for the activation of the said precious metal(s).

The adjusted bath from Stage 6, optionally after a final dilution stage, is used to treat the substrates or carriers. For example, once the carriers or substrates contain or have received a certain quantity of the said bath, the substrates or carriers are heated in order to obtain a deposit of precious metals (advantageously in the form of a salt, for example the nitrate salt). These operations can be repeated until the desired quantity of precious metals is obtained, using the same bath or other baths containing for example one or more particular precious metals. The said other baths have for example different compositions, for example in order to deposit another metal or other metals.

Once the substrates or carriers contain or have received the desired quantity of precious metals, the substrates or carriers are subjected to a calcination stage at high temperature (more than 600° C, preferably more than 800° C) in order to form a precious metal deposit in metallic form.

It is clear that one or more intermediate or subsequent stages may be useful in order to obtain the desired catalytic substrate or carrier.

In a particular form of embodiment, the process comprises two or more separate Stage 4's, for example one treats in a substantially separate manner at least some first catalytic substrates or carriers presenting substantially the same catalytic composition in precious metals by means of a first acid bath or acid solution (nitric + hydrochloric), and some second substrates or carriers presenting catalytic compositions in precious metals different from that of the said first substrates or carriers in a second acid bath or solution (nitric + hydrochloric) (second bath or solution having an acid composition identical to or different from that of the first bath or solution), so as to prepare a first acid bath with a first concentration in precious metals and a second acid bath with a second concentration in precious metals. The preparation of the separate baths enables them to be mixed subsequently in order to obtain a bath or solution presenting a content of precious metals closed to the content desired or with a ratio of precious metals close to the ratio desired.

In this form of embodiment of the process there is, advantageously, at least partial mixing together of the two baths, if appropriate after treatment of one bath or both baths in order to reduce the content of chloride and hydrochloric acid, and if appropriate after a stage to adjust the pH and/or content of metals of one bath or both baths. The proportion of the said baths mixed together will depend on the content and nature of precious metals in the said baths.

In yet another form of embodiment, Stage 2 of the process comprises more than one treatment stage.

Advantageously, the substrates or carriers are treated by at least two successive treatments, each comprising at least:
- A Stage A (Stage 2): treatment of substrates or carriers at least partially imbibed with the said aqueous and/or alcoholic composition with an acid solution containing at least sulphuric acid but weak in nitric acid (and advantageously weak in hydrochloric acid), and
- A Stage B (Stage 3): washing of the substrates or carriers treated with the said acid solution containing at least sulphuric acid but weak in nitric acid (and advantageously weak in hydrochloric acid), with an aqueous and/or alcoholic composition weak in sulphuric acid and nitric acid
before being treated by means of an acid bath containing nitric acid and hydrochloric acid (Stage 4).

In a preferred form of embodiment, the process comprises at least the following stages:
- Stage 6: adjustment of pH and/or the content of one or more precious metals and/or other additives to the bath weak in hydrochloric acid in order to form the solution suitable for use in a process for adding to a catalytic carrier at least one coating based on at least one of the said precious metals, the said deposit or coating being catalytic and/or capable of becoming catalytic after one or more treatments, and
- Stage 7: treatment of one or more substrates or carriers, in particular metallic, ceramic etc. types, with a bath solution weak in hydrochloric acid, advantageously after adjusting its pH and/or its content in precious metal(s) and/or other additives, in order to imbibe and/or deposit on the said substrate(s) or carrier(s) a deposit containing at least one precious metal or a layer containing at least one precious metal
- Stage 8: fixing of the said precious metal(s) on the said substrate(s) or carrier(s), with possibly but advantageously at least one further stage comprising at least
- A Stage 9: activation of the said precious metal(s).

According to another detail of a form of embodiment, the acid solution from the bath weak in hydrochloric acid, after having been used to imbibe or deposit one or more precious metals, is used for the preparation of the acid bath containing at least nitric acid and hydrochloric acid for Stage 4 of the treatment, and/or to adjust the pH and/or the content of one or more precious metals in the bath for Stage 6 (bath weak in hydrochloric acid) to form the solution destined to be used as such or after adding one or more additives to provide a carrier with at least a coating or deposit which is catalytic or capable of becoming catalytic based on at least one of the said precious metals.

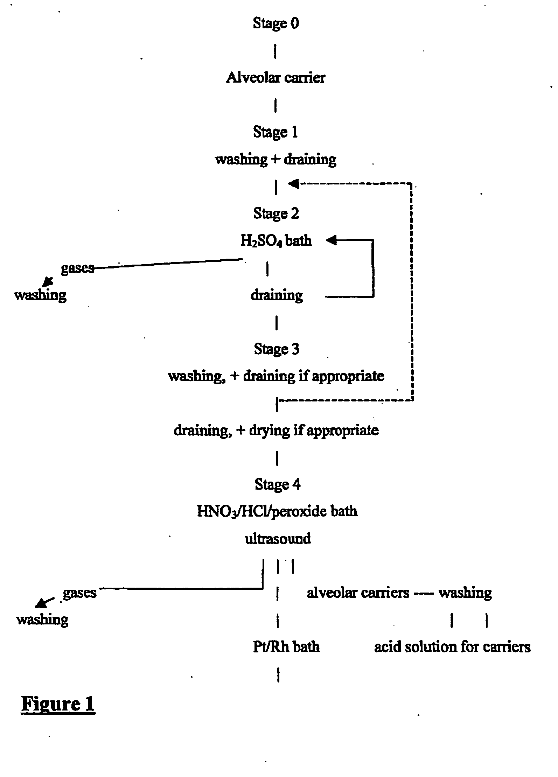

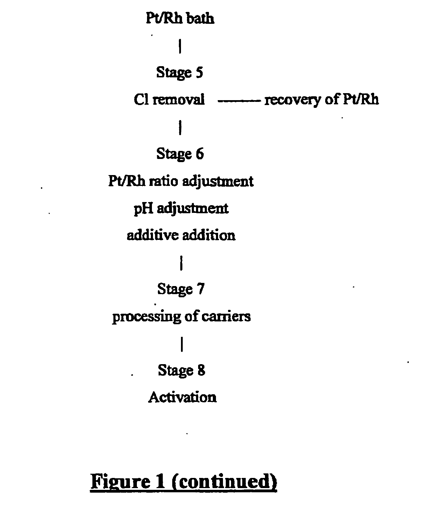

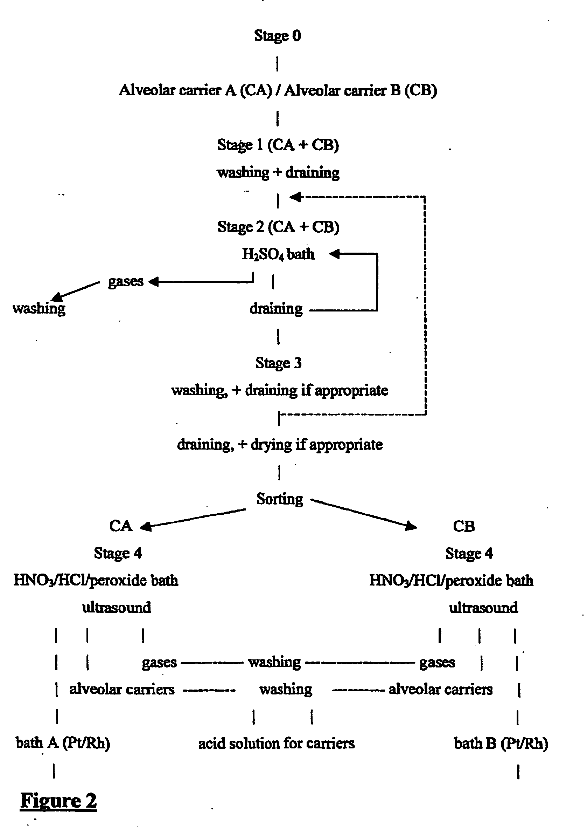

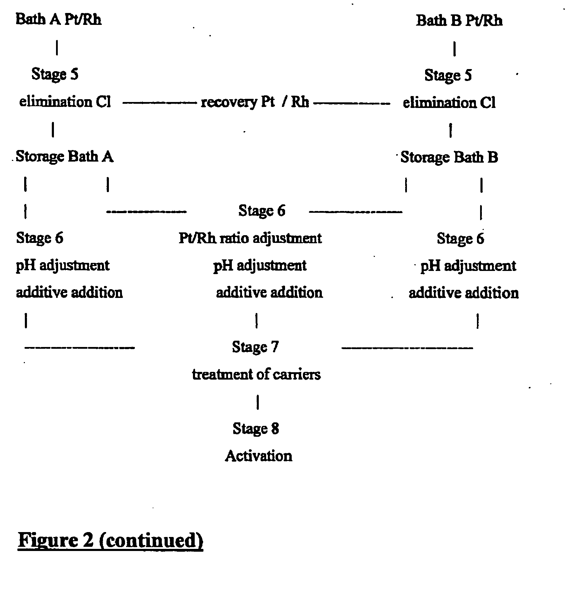

Optionally at least part of the bath obtained after Stage 5 is subjected to a stage for the at least partial recovery of one or more precious metals in the form of a solid or paste and/or in the form of a concentrated liquid composition. Particularities and details of a process according to the invention will appear from the following detailed description, in which reference is made to Figure 1 showing in diagrammatic form a process according to the invention and Figure 2 showing in diagrammatic form a particular embodiment of the process in Figure 1.

The process described in Figure 1 is a preferred process and is given solely as an example.

This process comprises the following stages:

### Stage 0

Used catalytic exhausts from cars have been recovered. These catalytic exhausts comprise an alveolar carrier (for example a ceramic body presenting a series of parallel channels). This alveolar carrier is provided with a catalytic layer based on platinum/rhodium or palladium/rhodium, this layer no longer having the desired effectiveness.

The alveolar carrier has external protection in the form of an envelope of steel or other metal.

The catalytic exhausts are taken apart in order to keep only the alveolar internal carriers having a used catalytic layer based on platinum/rhodium or palladium/rhodium.

### Stage 1

The alveolar carriers are treated with at least one aqueous composition containing ethanol, a degreasing agent and a surface-active agent, this composition being free from sulphuric acid, nitric acid and hydrochloric acid.

For the purposes of this treatment, the alveolar carriers are immersed in a bath of the said composition. The temperature of the bath is maintained at 60° C. The bath is subjected to agitation by agitation.

This treatment has been carried out for 30 minutes.

The temperature of the bath could have been different, for example 30° C and 150° C. This washing stage could also have taken place under pressure.

This treatment could have been carried in sub-stages, and for a different period of time, for example between 10 minutes and 2 hours.

The alveolar carriers have then been removed from the treatment bath and drained in order to remove the excessive quantity of water present in the alveolar carriers.

After this draining operation, the quantity of water, alcohol, etc. present in the alveolar carriers will be sufficient to ensure that at least 75% in volume, and preferably at least 85% in volume of the porosity accessible to water (at 20° C and atmospheric pressure) is imbibed with the said aqueous and alcoholic solution.

### Stage 2

The alveolar carriers imbibed with water coming from Stage 1 are treated in a bath of sulphuric acid of which the pH is less than 1. This treatment is carried out by immersing the alveolar carriers in the bath of sulphuric acid. The temperature during this treatment was maintained between 30 and 45° C. The temperature of the bath could have been between 20° C and 100° C, or could have presented a temperature peak beyond 50° C.

The sulphuric acid bath contains neither nitric acid nor hydrochloric acid.

The bath has advantageously been subjected to agitation, for example by means of ultrasound.

The treatment has been carried out for 30 minutes and at atmospheric pressure. The duration of the treatment can vary for example between 10 minutes and 2 hours, or even more, depending on the desired result.

Gases emanating from the treatment have been recovered in order to be taken to a gas scrubbing system.

This acid bath accumulates various elements and compounds, including rare earths (cerium, lanthanum, mixtures of rare earths, etc.), alkali metals and alkaline earth metals, as well as metals such as aluminium, iron, chromium, zinc, etc.

The bath is not sufficiently aggressive to dissolve platinum, palladium or rhodium. When the bath contains a quality of metals approaching 75% of saturation at the processing temperature, the acid bath is treated in order to remove from it the elements (rare earths), metals and salts, and to regenerate the acid bath for renewed use. This regeneration necessitates, among other operations, the addition of fresh sulphuric acid.

After treatment of the alveolar carriers, the alveolar carriers are drained over the bath in order to take a maximum of acid solution out of the ceramic bodies.

This Stage 2 thus allows the recovery of rare earths, particularly cerium, present in the catalytic exhausts.

### Stage 3

After the draining stage, the alveolar carriers from Stage 2 are washed by means of a mixture of water, alcohol and surface-active agents. The pH of the mixture is acid.

The washing operation is performed by spraying the aqueous mixture into the channels of the alveolar carriers in order to drive out traces of sulphuric acid and traces of salts such as metal sulphates. The mixture coming out of the channels of the alveolar carriers is gathered in a recipient which serves to supply the system for spraying the aqueous mixture into the channels of the alveolar carriers.

The liquid washing mixture is advantageously brought to a temperature between 50° C and 75° C.

The washing medium can be used in a loop or circuit to wash several series of treated substrates, until the content of sulphuric acid and sulphates is excessive.

The washing operation is monitored so that the alveolar carriers are substantially free from sulphuric acid and sulphates.

After this monitoring stage, the ceramic bodies are subjected to a draining operation, if appropriate with drying, for example by passing hot air into the channels of the ceramic bodies.

If drying took place, the temperature of the air was for example approximately 80° C - 110° C. Drying was performed in order to substantially eliminate all traces of water and alcohol from the alveolar carriers.

### Stage 4

The alveolar carriers (dried if appropriate) coming from Stage 3 are now immersed in an acid bath containing nitric acid (approximately 65% to 75% by weight), hydrochloric acid (approximately 7% by weight), ethanol (approximately 12% by weight), peroxide of ammonia (approximately 3% by weight) and water. This bath is subjected to ultrasound agitation (resulting from one or more ultrasonic transmitters).

The temperature of the bath is maintained between 20° C and 30° C.

Furthermore, the treatment takes place in a tank maintained at least partially under a pressure of approximately 10 x 10⁵ Pa. In this form of embodiment, the pressure is made to vary several times between a pressure below 1 x 10⁵ Pa and a pressure above 10 x 10⁵ Pa.

The gases leaving the tank are recovered and treated in a gas scrubbing system.

The bath is used to successively treat series of alveolar carriers coming from Stage 3 until the bath reaches a specific concentration of platinum and/or palladium and/or rhodium (a content corresponding to approximately 50 to 60% of the saturation concentration of the metals in the bath at the temperature considered).

After treatment for 60 minutes, the alveolar carriers are taken out of the bath in order to be drained and then washed with an aqueous composition containing ethanol. The washing operation is carried out for example by immersing the alveolar carriers in a washing bath subjected to ultrasound agitation. This washing operation is intended to recover the acid and precious metals still present on and/or in the alveolar carriers.

The acid washing solution can then be treated in order to recover the precious metals present, while the washed alveolar carriers can be crushed to form a mineral filler.

The alveolar carriers may be treated a second time using a bath of sulphuric acid. In this case, after the washing in Stage 3, the alveolar carriers are treated again as described in Stage 2. This possible second treatment is represented by broken lines.

### Stage 5

The nitric acid bath rich in platinum and palladium coming from Stage 4 is treated by NOₓ bubbling in order to convert the metal chlorides present into nitrate and/or nitric and/or nitrous compounds of the said metals. The temperature of the bath is maintained at approximately 10 - 20° C.

This treatment is maintained until a bath is obtained which is weak in hydrochloric acid, presenting a hydrochloric acid content of less than 0.5% by weight

Part of the bath may be treated in order to recover precious metals, either in metallic form or in the form of salts, for example in nitrate form.

### Stage 6

The bath weak in hydrochloric acid coming from Stage 5 is treated in order to adjust its pH and to adjust its precious metal content (for example to obtain a specific weight ratio of platinum/rhodium or palladium/rhodium) and its content in other additives. One thus obtains a mother solution suitable for use, optionally after a dilution or refining stage, in at least one stage of a process to add to a carrier a deposit or coating which is catalytic or capable of becoming catalytic, based on at least one of the said precious metals.

### Stage 7

The adjusted bath from stage 6, optionally after a final dilution stage, is used to treat the substrates or carriers, which are for example metallic or ceramic. Once the carriers or substrates contain a certain quantity of the said bath, the substrates or carriers are heated in order to obtain a deposit of precious metals (advantageously in the form of a salt, for example the nitrate salt). These operations can be repeated until the desired quantity of precious metals is obtained, using the same bath or other baths containing for example one or more particular precious metals.

### Stage 8

Once the substrates or contain or have received the desired quantity of precious metals, the substrates or carriers are subjected to a calcination stage at high temperature (more than 600° C, preferably more than 800° C) in order to form a precious metal deposit in metallic form.

The new alveolar carriers are then placed in protective envelopes or sleeves in order to form a catalytic exhaust.

Figure 2 shows a process similar to that in Figure 1.

In the process in Figure 2:
- two types of alveolar carrier A and B are used as a source of Pt or Pd and Rh (for example the alveolar carriers A are rich in Pt, whereas the alveolar carriers B are rich in Pt and rhodium)
- the treatment of alveolar carriers A and B is carried out in a similar manner with the same media as in Stages 1, 2 and 3, the alveolar carriers A and B being optionally treatable simultaneously,
- After draining and/or drying in Stage 3, the alveolar carriers A and B are sorted for the preparation of the different acid baths;
- Once sorted, the alveolar carriers A and B are treated in a distinct manner for Stages 4 and 5, except for the washing of gases and ceramic bodies
- The baths (one bath rich in Pt and one bath rich in Pt/Rh) coming from Stage 5 can be stored separately for subsequent use
- in Stage 6, the baths are mixed in a controlled manner in order to obtain for example the desired Pt/Rh ratio
- stages 7 and 8 remain identical to those in Figure 1

In a particular form of embodiment the baths are used after a Stage 6 to successively support alveolar carriers, with or without an intermediate activation stage. This particular form of embodiment is shown by the broken lines in Figure 2.

Similarly, it is possible to successively treat a carrier with one or more baths rich respectively in Pt and in Pt/Rh, and with a bath resulting from a mixture of the said rich baths.

The example in Figure 2 is described for platinum: it could clearly have been described with palladium.

## Claims

1. Process for the recovery of precious metals from used and/or defective catalytic carriers, this process comprising at least the preparation of an acid solution containing at least one precious metal chosen from gold, platinum, palladium and rhodium, or mixtures of these from used and/or defective catalytic carriers, the said solution being weak in aluminium, iron, zinc, calcium and magnesium and being suitable or adapted for use, optionally after a refining stage, to add to a carrier at least one deposit or layer, catalytic or capable of becoming catalytic, based on at least one of the said precious metals, the said process comprising at least the following stages:
- Stage 1: treatment of used and/or defective catalytic carriers with at least an aqueous and/or alcoholic composition, optionally in the form of vapour or partially in the form of vapour, to at least partially imbibe the catalytic carriers with the said aqueous and/or alcoholic solution;
- Stage 2: treatment of carriers at least partially imbibed with the said aqueous and/or alcoholic composition with acid solution containing at least sulphuric acid but weak in nitric acid and optionally weak in hydrochloric acid;
- Stage 3: washing the carriers treated with the said acid solution containing at least sulphuric acid and weak in nitric acid with an aqueous and/or alcoholic composition weak in sulphuric acid and nitric acid ;
- optionally a Stage 3bis for draining and/or drying of the washed carriers
- Stage 4: treatment of carriers which have been treated with the said acid solution containing at least sulphuric acid and weak in nitric acid and washed with an aqueous and/or alcoholic composition weak in sulphuric acid and nitric acid, optionally after a draining and/or drying stage, in an acid bath containing at least nitric acid and hydrochloric acid, the said acid bath including at least 10% by weight of nitric acid and at least 5% by weight of hydrochloric acid, the said bath being subjected to agitation by ultrasound;
- Stage 5: when the concentration in the acid bath of one or more precious metals is higher than a minimum value, optionally after a stage to adjust the content in the bath of one or more precious metals or one or more other elements, treatment at least chemically, and in particular chemically and thermally, of at least a part of the bath to lower the contents of chlorine and chlorides in the bath, by transforming the metal chlorides present in the treated part of the bath into nitrate and/or nitric and/or nitrous compounds of the said metals, whereby recording its content of hydrochloric acid to less than 1% by weight and forming a bath weak in hydrochloric acid;
- optionally a Stage 6: adjustment of pH and/or the content of one or more - optionally a Stage 6: adjustment of pH and/or the content of one or more precious metals and/or other additives to the bath weak in hydrochloric acid in order to form the solution suitable for use in a process for adding to a carrier at least one coating, catalytic or capable of becoming catalytic, based on at least one of the said precious metals ;
- optionally a Stage 7: treatment of one or more carrier(s), in particular of the ceramic and/or metallic type, with the bath solution weak in hydrochloric acid, optionally after adjustment of its pH and/or its content in one or more precious metals and/or other additives, to imbibe or deposit on and/or in the said carrier(s) at least one deposit or layer containing at least one or more precious metals, followed by at least one fixing stage of the said precious metals on and/or in the said carrier(s) and/or by a stage for the activation of the said precious metal(s)

2. Process according to Claim 1, **characterised in that** for Stage 5 the treatment is carried out by treating the bath with a source of nitrogen and/or NOₓ, preferably by bubbling nitrogen and/or NOₓ into the bath.

3. Process according to Claim 1 or Claim 2, **characterised in that** carriers which have been treated with the said acid solution containing at least sulphuric acid and weak in nitric acid and washed with an aqueous and/or alcoholic composition weak in sulphuric acid and nitric acid are treated in an acid bath containing at least nitric acid and hydrochloric acid together with at least one peroxidated compound.

4. Process according to Claim 3, **characterised in that** the peroxidated compound is chosen from hydrogen peroxide, peroxide of ammonia and mixtures of these.

5. Process according to any of the previous Claims, **characterised in that** carriers which have been treated with the said acid solution containing at least sulphuric acid and weak in nitric acid and washed with an aqueous and/or alcoholic composition weak in sulphuric acid and in nitric acid are drained and/or dried before being treated in an acid bath containing at least nitric acid and hydrochloric acid, the said acid bath containing at least 10% by weight of nitric acid and at least 5% by weight of hydrochloric acid, the said bath being subjected to agitation by ultrasound, resulting from one or more ultrasonic transmitters.

6. Process according to any of the previous Claims, **characterised in that** carriers which have been treated with the said acid solution containing at least sulphuric acid and weak in nitric acid and washed with an aqueous and/or alcoholic composition weak in sulphuric acid and in nitric acid, optionally after a drying stage, are treated in an acid bath containing at least nitric acid and hydrochloric acid, the said acid bath comprising at least 25% by weight, advantageously at least 35% by weight and preferably at least 50% by weight of nitric acid and less than 20% by weight, in particular less than 15% by weight and preferably less than 10% by weight of hydrochloric acid, the said bath being subjected to agitation by ultrasound resulting from one or more ultrasonic transmitters.

7. Process according to any of the previous Claims, **characterised in that** treatment of carriers with at least an aqueous and/or alcoholic composition, optionally in the form of vapour or partially in the form of vapour is controlled in order to ensure that at least 75% of the porosity accessible to water is imbibed with the said aqueous and/or alcoholic solution

8. Process according to any of the previous Claims, **characterised in that** the carriers after having been treated in an acid bath containing at least nitric acid and hydrochloric acid are subjected to washing by means of an aqueous and/or alcoholic composition, advantageously acid, optionally in the form of vapour, in order to recover the acid and precious metals still present in the carriers in an acid solution.

9. Process according to the previous Claim, **characterised in that** the acid solution resulting from the washing of the carriers treated in an acid bath is used as a washing composition, optionally after a treatment stage, or as a composition for adjusting the content of one or more compounds.

10. Process according to any of the previous Claims, **characterised in that** one treats in a substantially distinct manner at least first catalytic carriers presenting substantially the same catalytic composition in precious metals, and second catalytic carriers of catalytic composition in precious metals different from that of the said first carriers, so as to prepare a first acid bath with a first concentration in precious metals and a second acid bath with a second concentration in precious metals, and **in that** the said baths are at least partially mixed together, optionally after treating one or both baths in order to reduce their contents of chloride and hydrochloric acid, and optionally after a stage to adjust the pH and/or the content of metal(s) in one or both baths.

11. Process according to any of the previous Claims, **characterised in that** the carriers at least partially imbibed with the said aqueous and/or alcoholic composition are treated in Stage 1 in a bath of an acid solution containing at least sulphuric acid but weak in nitric acid and subjected to ultrasound agitation.

12. Process according to any of the previous Claims, **characterised in that** the acid bath containing nitric acid and hydrochloric acid used in Stage 4 contains at least one alcohol.

13. Process according to the previous Claim, **characterised in that** the said acid bath contains less than 20% by weight of water, advantageously less than 15% by weight of water, preferably less than 10% by weight of water.

14. Process according to any of the previous Claims, **characterised in that** carriers are treated at least by two successive treatments, each comprising:
- a Stage 2: treatment of the carriers at least partially imbibed with the said aqueous and/or alcoholic composition with an acid solution containing at least sulphuric acid but weak in nitric acid, and
- a Stage 3: washing the carriers treated with the said acid solution containing at least sulphuric acid but weak in nitric acid, with an aqueous and/or alcoholic composition weak in sulphuric acid and in nitric acid
before being treated by means of an acid bath containing nitric acid and hydrochloric acid.

15. Process according to any of the previous Claims, **characterised in that** Stage 4 is carried out while maintaining the temperature of the acid bath between 10° C and 55° C, advantageously between 20° C and 30° C.

16. Process according to any of the previous Claims, **characterised in that** Stage 4 is carried out at least partially under a pressure between 1.5 x 10⁵ Pa and 20 x 10⁵ Pa and/or at least partially place takes place with variations of pressure, advantageously between a pressure below 1 x 10⁵ Pa and a pressure above 2 x 10⁵ Pa.

17. Process according to any of the previous Claims, **characterised in that** it also comprises at least the following stages:
- Stage 6: adjustment of pH and/or the content of one or more precious metals and/or other additives to the bath weak in hydrochloric acid in order to form the solution suitable for use in a process for adding to a carrier which is catalytic or capable of becoming catalytic at least one coating based on at least one of the said precious metals;
- Stage 7: treatment of one or more carriers with the bath solution weak in hydrochloric acid, advantageously after adjustment of its pH and/or its content in one or more precious metals and/or other additives, to imbibe or deposit on and/or in the said carrier a deposit or layer containing at least one or more precious metals;
- Stage 8: fixing of the said precious metals on the said or carriers, with optionally at least one further stage comprising at least
- A Stage 9: activation of the said precious metal(s).

18. Process according to the previous Claim, **characterised in that** the acid solution from the bath weak in hydrochloric acid, after having been used to imbibe or deposit one or more precious metals, is used for the preparation of the acid bath containing at least nitric acid and hydrochloric acid for Stage 4 of the treatment, and/or to adjust the pH and/or the content of one or more precious metals in the bath for Stage 6 (bath weak in hydrochloric acid) to form the solution destined to be used as such or after adding one or more additives to provide a carrier with at least a coating or deposit which is catalytic or capable of becoming catalytic based on at least one of the said precious metals.

19. Process according to any of the previous Claims, **characterised in that** at least part of the bath obtained after Stage 5 is subjected to a stage for the at least partial recovery of one or more precious metals in the form of a solid or paste and/or in the form of a concentrated liquid composition.

## Patentansprüche

1. Verfahren zur Rückgewinnung von Edelmetallen von verwendeten und/oder fehlerhaften katalytischen Trägern, wobei dieses Verfahren mindestens die Herstellung von einer Säurelösung welche mindestens ein Edelmetall ausgewählt aus Gold, Platin, Palladium und Rhodium, oder Mischungen von diesen enthält, von verwendeten und/oder fehlerhaften katalytischen Trägern, umfasst, wobei diese Lösung arm an Aluminium, Eisen, Zink, Kalzium und Magnesium ist und brauchbar oder geeignet zur Verwendung ist, gegebenenfalls nach einer Raffinationsstufe, um zu einem Träger mindestens eine Ablagerung oder Schicht hinzuzufügen, welche katalytisch oder fähig ist, katalytisch zu werden, basierend auf mindestens einem von den Edelmetallen, wobei das Verfahren mindestens die folgenden Stufen umfasst:
- Stufe 1: Behandlung von verwendeten oder fehlerhaften katalytischen Trägern mit mindestens einer wässrigen und/oder alkoholischen Zusammensetzung, gegebenenfalls in Form von Dampf oder teilweise in Form von Dampf, um zumindest teilweise die katalytischen Träger mit der wässrigen und/oder alkoholischen Lösung zutränken;
- Stufe 2: Behandlung von Trägern, welche mindestens teilweise mit der wässrigen und/oder alkoholischen Zusammensetzung getränkt wurden, mit einer Säurelösung enthaltend mindestens Schwefelsäure, welche aber arm an Salpetersäure ist und gegebenenfalls arm an Salzsäure;
- Stufe 3: Waschen der Träger, welche mit der Säurelösung, welche mindestens Schwefelsäure enthält und arm an Salpetersäure ist, behandelt wurden, mit einer wässrigen und/oder alkoholischen Zusammensetzung, welche arm an Schwefelsäure und Salpetersäure ist;
- gegebenenfalls eine 3Bis-Stufe zum Abtropfen und/oder Trocknen der gewaschenen Träger;
- Stufe 4: Behandlung von Trägern, welche mit der Säurelösung, die mindestens Schwefelsäure enthält, und arm an Salpetersäure ist, behandelt wurden und mit einer wässrigen und/oder alkoholischen Zusammensetzung gewaschen wurden, welche arm an Schwefelsäure und Salpetersäure ist, gegebenenfalls nach einer Abtropf- und/oder Trocknungsstufe, in einem Säurebad, welches mindestens Salpetersäure und Salzsäure enthält, wobei das Säurebad mindestens 10 Gewichts-% von Salpetersäure und mindestens 5 Gewichts-% von Salzsäure umfasst, wobei das Bad durch Ultraschall geschüttelt wird;
- Stufe 5: wenn die Konzentration in dem Säurebad von einem oder mehreren Edelmetallen größer ist als ein Minimumwert, gegebenenfalls nach einer Stufe zum Einstellen des Gehaltes in dem Bad von einem oder mehreren Edelmetallen oder einem oder mehreren anderen Elementen, mindestens chemischen und insbesondere chemischen und thermischen Behandeln von mindestens einem Teil des Bades zur Verringerung des Gehaltes von Chlor und Chloriden in dem Bad durch Umwandlung der im behandelten Teil des Bades vorliegenden Metallchloride, in Nitrate und/oder salpetersaure Verbindungen/oder salpetrige Verbindungen dieser Metallen, wobei sein Gehalt an Salzsäure auf weniger als 1 Gewichts-% reduziert wird und ein Bad gebildet wird, welches arm an Salzsäure ist;
gegebenenfalls eine Stufe 6: Einstellung von pH und/oder dem Gehalt von einem oder mehreren Edelmetallen und/oder anderen Additiven in dem Bad, welches arm an Salzsäure ist, um die Lösung zu bilden, welche brauchbar ist zur Verwendung in einem Verfahren zum Anbringen mindestens einer Beschichtung auf einem Träger, welche katalytisch oder fähig ist katalytisch zu werden basierend auf mindestens einem der Edelmetalle;
gegebenenfalls eine Stufe 7: Behandlung von einem oder mehreren Träger(n), insbesondere vom keramischen und/oder metallischen Typ, mit der Badlösung, welche arm an Salzsäure ist, gegebenenfalls nach Einstellung von seinem pH und/oder seinem Gehalt an einem oder mehreren Edelmetallen und/oder anderen Additiven, um auf und/oder in dem/den Träger(n) mindestens eine Ablagerung oder Schicht aufzusaugen oder abzulagern, welche mindestens ein oder mehrere Edelmetalle enthält, gefolgt von mindestens einer Fixierungsstufe von den Edelmetallen auf und/oder in dem/den Träger(n) und/oder durch eine Stufe zur Aktivierung von dem/den Edelmetall(en).

2. Verfahren nach Anspruch 1, **dadurch gekennzeichnet, dass** in Stufe 5 die Behandlung durch Behandeln des Bades mit einer Quelle von Stickstoff und/oder NOₓ durchgeführt wird, bevorzugt durch Sprudeln von Stickstoff und/oder NOₓ in das Bad.

3. Verfahren nach Anspruch 1 oder Anspruch 2, **dadurch gekennzeichnet dass** Träger, welche mit der Säurelösung, welche mindestens Schwefelsäure enthält und arm an Salpetersäure ist, behandelt wurden und mit einer wässrigen und/oder alkoholischen Zusammensetzung, welche arm an Schwefelsäure und Salpetersäure ist, gewaschen wurden, in einem Säurebad, welches mindestens Salpetersäure und Salzsäure enthält, zusammen mit mindestens einer peroxidierten Verbindung, behandelt werden.

4. Verfahren nach Anspruch 3, **dadurch gekennzeichnet dass** die peroxygenierte Verbindung ausgewählt ist aus Wasserstoffperoxid, Peroxid von Ammoniak und Mischungen von diesen.

5. Verfahren nach einem der vorherigen Ansprüche, **dadurch gekennzeichnet dass** Träger, welche mit der Säurelösung, welche mindestens Schwefelsäure enthält und arm an Salpetersäure ist, behandelt wurden, und mit einer wässrigen und/oder alkoholischen Zusammensetzung, welche arm an Schwefelsäure und an Salpetersäure ist, gewaschen wurden und abgetropft und/oder getrocknet werden, bevor sie in einem Säurebad, welches mindestens Salpetersäure und Salzsäure enthält behandelt werden, wobei das Säurebad mindestens 10 Gewichts-% von Salpetersäure und mindestens 5 Gewichts-% von Salzsäure enthält, wobei das Bad durch Ultraschall geschüttelt wird, erzeugt von einem oder mehreren Ultraschallsendern.

6. Verfahren nach einem der vorherigen Ansprüche, **dadurch gekennzeichnet dass** Träger, welche mit der Säurelösung, welche mindestens Schwefelsäure enthält und arm an Salpetersäure ist, behandelt wurden und mit einer wässrigen und/oder alkoholischen Zusammensetzung, welche arm an Schwefelsäure und an Salpetersäure ist, gewaschen wurden, gegebenenfalls nach einer Trocknungsstufe, in einem Säurebad, welches mindestens Salpetersäure und Salzsäure enthält, behandelt werden, wobei das Säurebad mindestens 25 Gewichts-%, vorteilhafterweise mindestens 35 Gewichts-% und bevorzugt mindestens 50 Gewichts-% von Salpetersäure und weniger als 20 Gewichts-%, insbesondere weniger als 15 Gewichts-% und bevorzugt weniger als 10 Gewichts-% von Salzsäure umfasst, wobei das Bad durch Ultraschall geschüttelt wird, erzeugt von einem oder mehreren Ultraschallsendern.

7. Verfahren nach einem der vorherigen Ansprüche, **dadurch gekennzeichnet dass** die Behandlung von Trägern mit mindestens einer wässrigen und/oder alkoholischen Zusammensetzung gegebenenfalls in Form von Dampf oder teilweise in Form von Dampf kontrolliert wird, um sicherzustellen, dass mindestens 75 % der Porosität, welche Wasser zugänglich ist, mit der wässrigen und/oder alkoholischen Lösung getränkt wurde.

8. Verfahren nach einem der vorherigen Ansprüche, **dadurch gekennzeichnet dass** die Träger, nachdem sie in einem Säurebad, welches mindestens Salpetersäure und Salzsäure enthält behandelt wurden, Waschen unterworfen werden, mittels einer wässrigen und/oder alkoholischen Zusammensetzung, vorteilhafterweise Säure, gegebenenfalls in Form von Dampf, um die Säure und Edelmetalle, welche noch in den Trägern in einer Säurelösung vorhanden sind, zurückzugewinnen.

9. Verfahren nach dem vorherigen Anspruch, **dadurch gekennzeichnet dass** die Säurelösung, welche von dem Waschen der Träger, welche in einem Säurebad behandelt wurden, resultiert, als eine Waschzusammensetzung verwendet wird, gegebenenfalls nach einer Behandlungsstufe, oder als eine Zusammensetzung zum Einstellen des Gehaltes von einer oder mehreren Verbindung(en).

10. Verfahren nach einem der vorherigen Ansprüche, **dadurch gekennzeichnet, dass** man in einer im Wesentlichen unterschiedlichen Weise mindestens zuerst katalytische Träger behandelt, welche im Wesentlichen die gleiche katalytische Zusammensetzung in Edelmetallen aufweisen und zweitens katalytische Träger mit katalytischer Zusammensetzung in Edelmetallen, welche unterschiedlich von denen der ersten Träger sind, um ein erstes Säurebad mit einer ersten Konzentration an Edelmetallen und ein zweites Säurebad mit einer zweiten Konzentration an Edelmetallen herzustellen, und in dem die Bäder mindestens teilweise zusammengemischt werden, gegebenenfalls nach Behandeln von einem oder beiden Bädern, um ihren Gehalt an Chloriden und Salzsäure zu reduzieren und gegebenenfalls nach einer Stufe, um den pH und/oder den Gehalt von Metall(en) in einem oder beiden Bädern einzustellen.

11. Verfahren nach einem der vorherigen Ansprüche, **dadurch gekennzeichnet, dass** die Träger welche mindestens teilweise mit der wässrigen und/oder alkoholischen Zusammensetzung getränkt wurden in Stufe 1 in einem Bad mit einer Säurelösung, welche mindestens Schwefelsäure enthält, aber arm an Salpetersäure ist, behandelt werden und Schütteln durch Ultraschall ausgesetzt werden.

12. Verfahren nach einem der vorherigen Ansprüche, **dadurch gekennzeichnet dass** das in Stufe 4 verwendete Säurebad, welches Salpetersäure und Salzsäure enthält, mindestens einen Alkohol enthält.

13. Verfahren nach dem vorherigen Anspruch, **dadurch gekennzeichnet dass** das Säurebad weniger als 20 Gewichts-% von Wasser, vorteilhafterweise weniger als 15 Gewichts-% von Wasser und bevorzugt weniger als 10 Gewichts-% von Wasser enthält.

14. Verfahren nach einem der vorherigen Ansprüche, **dadurch gekennzeichnet dass** die Träger durch mindestens zwei aufeinander folgende Behandlungen behandelt werden, wobei jede umfasst:
- eine Stufe 2: Behandlung der Träger, welche mindestens teilweise mit der wässrigen und/oder alkoholischen Zusammensetzung getränkt wurden, mit einer Säurelösung, welche mindestens Schwefelsäure enthält, aber arm an Salpetersäure ist, und
- eine Stufe 3: Waschen der Träger, welche mit der Säurelösung, welche mindestens Schwefelsäure enthält, aber arm an Salpetersäure ist, behandelt wurden, mit einer wässrigen und/oder alkoholischen Zusammensetzung, welche arm an Schwefelsäure.
und Salpetersäure ist,
bevor diese mittels eines Säurebades, welches Salpetersäure und Salzsäure enthält, behandelt werden.

15. Verfahren nach einem der vorherigen Ansprüche, **dadurch gekennzeichnet dass** Stufe 4 ausgeführt wird, während die Temperatur von dem Säurebad zwischen 10 °C und 55 °C, vorteilhafterweise zwischen 20 °C und 30 °C, aufrecht erhalten wird.

16. Verfahren nach einem der vorherigen Ansprüche, **dadurch gekennzeichnet dass** Stufe 4 mindestens teilweise unter einem Druck zwischen 1,5 x 10⁵ Pa und 20 x 10⁵ Pa, und/oder mindestens teilweise mit Druckänderungen, vorteilhafterweise zwischen einem Druck unter 1 x 10⁵ Pa und einem Druck über 2 x 10⁵ Pa, durchgeführt wird.

17. Verfahren nach einem der vorherigen Ansprüche, **dadurch gekennzeichnet dass** es auch mindestens eine der folgenden Stufen umfasst:
- Stufe 6: Einstellung von pH und/oder dem Gehalt von einem oder mehreren Edelmetallen und/oder anderen Additiven in dem Bad, welches arm an Salzsäure ist, um eine Lösung zu bilden, die geeignet ist zur Verwendung in einem Verfahren zum Anbringen von mindestens einer Beschichtung basierend auf mindestens einem der Edelmetalle auf einen Träger, welcher katalytisch oder fähig ist, katalytisch zu werden;
- Stufe 7: Behandlung von einem oder mehreren Trägern mit der Badlösung, welche arm an Salzsäure ist, vorteilhafterweise nach Einstellung von seinem pH und/oder seinem Gehalt auf einem oder mehreren Edelmetallen und/oder anderen Additiven, um an und/oder in dem Träger eine Ablagerung oder Schicht aufzusaugen oder abzulagern, welche mindestens ein oder mehrere Edelmetalle enthält;
- Stufe 8: Fixieren von den Edelmetallen auf den Trägern, mit gegebenenfalls mindestens einer weiteren Stufe umfassend mindestens
- einer Stufe 9: Aktivierung von dem/den Edelmetall(en).

18. Verfahren nach dem vorherigen Anspruch, **dadurch gekennzeichnet, dass** die Säurelösung von dem Bad, welche arm an Salzsäure ist, nach der Verwendung zur Tränkung oder Ablagerung von einem oder mehreren Edelmetallen zur Herstellung von dem Säurebad, welches mindestens Salpetersäure und Salzsäure enthält, für Stufe 4 der Behandlung verwendet wird, und/oder um den pH und/oder den Gehalt von einem oder mehreren Edelmetallen in dem Bad für Stufe 6 (Bad, welches arm an Salzsäure ist) einzustellen, um die Lösung zu bilden, welche Bestimmt ist als solche verwendet zu werden oder nach Zugabe von einem oder mehreren Additiven zur Bereitstellung eines Trägers mit mindestens einer Beschichtung oder Ablagerung, welche katalytisch oder fähig ist, katalytisch zu werden, basierend auf mindestens einem von den Edelmetallen.

19. Verfahren nach einem der vorherigen Ansprüche, **dadurch gekennzeichnet dass** mindestens ein Teil von dem Bad, welches nach Stufe 5 erhalten wurde, einer Stufe zur zumindest teilweisen Rückgewinnung von einem oder mehreren Edelmetallen in Form von einem Feststoff oder einer Paste und/oder in Form von einer konzentrierten flüssigen Zusammensetzung, unterworfen wird.

## Revendications

1. Procédé de valorisation de métaux précieux à partir de supports catalytiques usagers et/ou défectueux, ce procédé comprenant au moins la préparation d'une solution acide contenant au moins un métal précieux choisi parmi l'or, le platine, le palladium et le rhodium, et leurs mélanges à partir de supports catalytiques usagers et/ou défectueux, ladite solution étant pauvre en aluminium, fer, zinc, calcium et magnésium et étant apte ou adaptée pour être utilisée, éventuellement après une étape d'affinage, pour munir un support d'au moins un dépôt ou revêtement catalytique à base d'au moins un desdits métaux précieux ou apte à devenir catalytique,
ledit procédé comprenant au moins les étapes suivantes :
- étape 1 : traitement des supports usagers et/ou défectueux avec au moins une composition aqueuse et/ou alcoolique, de manière optionnelle sous forme de vapeur ou partiellement sous forme de vapeur pour imbiber au moins partiellement les supports avec ladite solution aqueuse et/ou alcoolique ;
- étape 2 : traitement des supports au moins partiellement imbibés de ladite composition aqueuse et/ou alcoolique avec une solution acide contenant au moins de l'acide sulfurique, mais pauvre en acide nitrique, et de manière optionelle pauvre en acide chlorhydrique ;
- étape 3 : lavage des supports traités avec ladite solution acide contenant au moins de l'acide sulfurique et pauvre en acide nitrique, avec une composition aqueuse et/ou alcoolique pauvre en acide sulfurique et en acide nitrique ;
- éventuellement une étape 3bis d'égouttage et/ou de séchage des supports lavés ;
- étape 4 : traitement des supports qui ont été traités avec ladite solution acide contenant au moins de l'acide sulfurique et pauvre en acide nitrique et lavés avec une composition aqueuse et/ou alcoolique pauvre en acide sulfurique et en acide nitrique, éventuellement après une étape d'égouttage et/ou de séchage, de manière optionnelle après une étape d'égouttage et/ou de séchage, dans un bain acide contenant au moins de l'acide nitrique et de l'acide chlorhydrique, ledit bain acide comprenant au moins 10% en poids d'acide nitrique et au moins 5% en poids d'acide chlorhydrique, ledit bain étant soumis à une agitation par ultrasons ;
- étape 5 : lorsque la concentration du bain acide en un ou des métaux précieux est supérieure à une valeur minimale, éventuellement après une étape pour ajuster la teneur du bain en un ou des métaux précieux ou en un ou autres éléments, traitement au moins chimique, et en particulier chimique et thermique, d'au moins une partie du bain de manière à réduire la teneur en chlore et chlorures du bain, par transformation des chlorures de métaux présents dans la partie traitée du bain en des composés nitrates et/ou nitriques et/ou nitreux desdits métaux, d'où réduisant la teneur en acide chlorhydrique à moins de 1 % en poids et formant un bain pauvre en acide chlorhydrique,
- éventuellement une étape 6 : ajustement du pH et/ou de la teneur en un ou des métaux précieux et/ou autres additifs au bain pauvre en acide chlorhydrique pour former une solution apte à être utilisée dans un procédé pour munir un support d'au moins un dépôt ou revêtement catalytique ou apte à devenir catalytique à base d'au moins un desdits métaux précieux,
- éventuellement une étape 7 : traitement d'un ou de supports, en particulier du type métallique et/ou céramique, avec la solution du bain pauvre en acide chlorhydrique, avantageusement après ajustement de son pH et/ou de sa teneur en un ou des métaux précieux et/ou autres additifs, pour imbiber ou déposer sur et/ou dans le ou les dits supports au moins un dépôt ou couche contenant au moins un ou des métaux précieux, suivi au moins par une étape de fixation du ou desdits métaux précieux sur ou dans ledit ou lesdits supports et/ou par une étape d'activation du ou desdits métaux précieux.

2. Procédé suivant la revendication 1, **caractérisé en ce que** pour l'étape 5, le traitement est opéré en traitant le bain avec une source d'azote et/ou de NOₓ, de préférence par barbotage d'azote et/ou NOₓ dans le bain.

3. Procédé suivant la revendication 1 ou la revendication 2, **caractérisé en ce que** les supports qui ont été traités avec ladite solution acide contenant au moins de l'acide sulfurique et pauvre en acide nitrique et lavés avec une composition aqueuse et/ou alcoolique pauvre en acide sulfurique et en acide nitrique, sont traités dans un bain acide contenant au moins de l'acide nitrique et de l'acide chlorhydrique, ainsi qu'avec au moins un composé peroxydé.

4. Procédé suivant la revendication 3, **caractérisé en ce que** le composé peroxydé est choisi parmi le peroxyde d'hydrogène, le peroxyde d'ammoniac et leurs mélanges.

5. Procédé suivant l'une quelconque des revendications précédentes, **caractérisé en ce que** les supports qui ont été traités avec ladite solution acide contenant au moins de l'acide sulfurique et pauvre en acide nitrique et lavés avec une composition aqueuse et/ou alcoolique pauvre en acide sulfurique et en acide nitrique, sont égouttés et/ou séchés avant d'être traités dans un bain acide contenant au moins de l'acide nitrique et de l'acide chlorhydrique, ledit bain acide comprenant au moins 10% en poids d'acide nitrique et au moins 5% en poids d'acide chlorhydrique, ledit bain étant soumis à une agitation par ultrason, résultant d'un ou de plusieurs émetteurs ultrasoniques.

6. Procédé suivant l'une quelconque des revendications précédentes, **caractérisé en ce que** les supports qui ont été traités avec ladite solution acide contenant au moins de l'acide sulfurique et pauvre en acide nitrique et lavés avec une composition aqueuse et/ou alcoolique pauvre en acide sulfurique et en acide nitrique, éventuellement après une étape de séchage, sont traités dans un bain acide contenant au moins de l'acide nitrique et de l'acide chlorhydrique, ledit bain acide comprenant au moins 25% en poids, avantageusement au moins 35% en poids, de préférence au moins 50% en poids d'acide nitrique et moins de 20% en poids, en particulier moins de 15% en poids, de préférence moins de 10% en poids d'acide chlorhydrique, ledit bain étant soumis à une agitation par ultrason résultant d'un ou de plusieurs émetteurs ultrasoniques.

7. Procédé suivant l'une quelconque des revendications précédentes, **caractérisé en ce que** le traitement des supports avec au moins une composition aqueuse et/ou alcoolique, éventuellement sous forme de vapeur ou partiellement sous forme de vapeur est contrôlée pour assurer qu'au moins 75% de la porosité accessible à l'eau soit imbibée par ladite solution aqueuse et/ou alcoolique.

8. Procédé suivant l'une quelconque des revendications précédentes, **caractérisé en ce que** les supports, après avoir été traités dans un bain acide contenant au moins de l'acide nitrique et de l'acide chlorhydrique, sont soumis à un lavage au moyen d'une composition aqueuse et/ou alcoolique, avantageusement acide, éventuellement sous forme de vapeur, pour récupérer l'acide et des métaux précieux encore présents dans les supports dans une solution acide.

9. Procédé suivant la revendication précédente, **caractérisé en ce que** la solution acide résultant du lavage de supports traités dans un bain acide est utilisée en tant que composition de lavage, éventuellement après une étape de traitement, ou en tant que composition pour ajuster la teneur en un ou des composés.

10. Procédé suivant l'une quelconque des revendications précédentes, **caractérisé en ce qu'**on traite de manière sensiblement distincte au moins des premiers supports catalytiques présentant sensiblement une même composition catalytique en métaux précieux, et des deuxièmes supports de composition catalytique en métaux précieux différente de celle desdits premiers supports, de manière à préparer un premier bain acide avec une première composition en métaux précieux et un deuxième bain acide avec une deuxième composition en métaux précieux, et **en ce qu'**on mélange au moins partiellement lesdits bains ensemble, éventuellement après traitement d'un des bains ou des deux bains pour en réduire leur teneur en chlorure et en acide chlorhydrique, et éventuellement après une étape pour ajuster le pH et/ou la teneur en un ou des métaux d'un ou des bains.

11. Procédé suivant l'une quelconque des revendications précédentes, **caractérisé en ce que** les supports au moins partiellement imbibés de ladite composition aqueuse et/ou alcoolique sont traités, dans l'étape 1, dans un bain d'une solution acide contenant au moins de l'acide sulfurique, mais pauvre en acide nitrique, soumis à une agitation par ultrasons.

12. Procédé suivant l'une quelconque des revendications précédentes, **caractérisé en ce que** le bain acide contenant de l'acide nitrique et chlorhydrique utilisé dans l'étape 4 comprend au moins un alcool.

13. Procédé suivant la revendication précédente, **caractérisé en ce que** ledit bain acide contient moins de 20% en poids d'eau, avantageusement moins de 15% en poids d'eau, de préférence moins de 10% en poids d'eau.

14. Procédé suivant l'une quelconque des revendications précédentes, **caractérisé en ce que** les supports sont traités au moins par deux traitements successifs comportant chacun :
- une étape 2 : traitement des supports au moins partiellement imbibés de ladite composition aqueuse et/ou alcoolique avec une solution acide contenant au moins de l'acide sulfurique, mais pauvre en acide nitrique, et
- une étape 3 : lavage des supports traités avec ladite solution acide contenant au moins de l'acide sulfurique et pauvre en acide nitrique, avec une composition aqueuse et/ou alcoolique pauvre en acide sulfurique et en acide nitrique ;
avant d'être traités au moyen d'un bain acide contenant de l'acide nitrique et de l'acide chlorhydrique.

15. Procédé suivant l'une quelconque des revendications précédentes, **caractérisé en ce que** l'étape 4 est opérée en maintenant la température du bain acide entre 10°C et 55°C, avantageusement entre 20°C et 30°C.

16. Procédé suivant l'une quelconque des revendications précédentes, **caractérisé en ce que** l'étape 4 du procédé est opérée au moins partiellement sous une pression comprise entre 1,5 x 10⁵ Pa et 20 x 10⁵ Pa et/ou est au moins partiellement opérée avec des variations de pression, avantageusement entre une pression inférieure à 1 x 10⁵ Pa et une pression supérieure à 2 x 10⁵ Pa..

17. Procédé suivant l'une quelconque des revendications précédentes, **caractérisé en ce qu'**il comporte en outre au moins les étapes suivantes:
- étape 6 : ajustement du pH et/ou de la teneur en un ou des métaux précieux et/ou autres additifs au bain pauvre en acide chlorhydrique pour former la solution destinée à être utilisée dans un procédé pour munir un support d'au moins un dépôt ou revêtement catalytique ou apte à devenir catalytique à base d'au moins un desdits métaux précieux,
- étape 7 : traitement d'un ou de supports avec la solution du bain pauvre en acide chlorhydrique, avantageusement après ajustement de son pH et/ou de sa teneur en un ou des métaux précieux et/ou autres additifs, pour imbiber ou déposer sur et/ou dans ledit support un dépôt ou une couche contenant au moins un ou plusieurs métaux précieux,
- étape 8 : fixation du ou desdits métaux précieux sur ledit ou lesdits supports, avec éventuellement au moins une étape ultérieure comprenant au moins une
- étape 9 : activation du ou desdits métaux précieux.

18. Procédé suivant la revendications précédente, **caractérisé en ce que** la solution acide du bain pauvre en acide chlorhydrique, après avoir été utilisée pour imbiber ou déposer un ou des métaux précieux est utilisée pour la préparation du bain acide contenant au moins de l'acide nitrique et de l'acide chlorhydrique pour l'étape 4 du traitement, et/ou pour ajuster le pH et/ou la teneur en un ou des métaux précieux du bain de l'étape 6 (bain pauvre en acide chlorhydrique) pour former la solution destinée à être utilisée en tant que telle ou après ajout d'un ou d'additifs, pour munir un support d'au moins un dépôt ou revêtement qui est catalytique ou apte à devenir catalytique à base d'au moins un desdits métaux précieux.

19. Procédé suivant l'une quelconque des revendications précédentes, **caractérisé en ce qu'**on soumet au moins une partie du bain acide obtenu après l'étape 5 à une étape de récupération au moins partielle d'un ou de métaux précieux sous forme solide ou pâteuse et/ou sous forme de composition liquide concentrée.
